# EUROPEAN PATENT SPECIFICATION

(11) **EP 3 942 160 B1**
(45) Date of publication and mention of the grant of the patent: **03.05.2023**
(21) Application number: 20710041.3
(22) Date of filing: 17.02.2020
(51) Int. Cl.: F01K 13/02, F01K 23/10, F01K 11/02, F22B 35/10, F22B 37/26, F22D 11/00

(54) **POWER PLANT AND WATER CLEANING METHOD FOR A ONCE-THROUGH WATER/STEAM CYCLE OF A POWER PLANT**
KRAFTWERK UND WASSERREINIGUNGSVERFAHREN FÜR EINEN NICHTREZIRKULIERTEN WASSER-/DAMPFKREISLAUF EINER KRAFTWERKSANLAGE
CENTRALE ÉLECTRIQUE ET PROCÉDÉ DE D'ÉPURATION DE L'EAU POUR UN CYCLE EAU/VAPEUR À PASSAGE UNIQUE D'UNE CENTRALE ÉLECTRIQUE

(30) Priority: 15.05.2019 EP 19174635
(43) Date of publication of application: 26.01.2022
(73) Proprietor: NEM Energy B.V., 2382 BL Zoeterwoude (NL)
(72) Inventor: DYLLUS, Ronald, 63110 Rodgau (DE); ROP, Peter Simon, 2731 BM Benthuizen (NL); VOIT, Kai, 64750 Lützelbach (DE)
(74) Representative: Heidler, Philipp
(86) International application number: PCT/EP2020/054074
(87) International publication number: WO 2020/229001

(56) References cited:
- EP-A1- 0 215 230
- EP-A2- 0 475 212
- FR-A1- 2 509 901
- JP-A- S58 190 690
- JP-A- S58 222 905
- JP-A- S60 101 204
- US-A- 4 709 664
- US-B1- 8 820 078

## Description

### FIELD OF THE INVENTION

The present invention relates to a power plant and a water cleaning method for a once-through water-steam cycle of a power plant.

More specifically, the invention relates to water cleaning during start-up of the power plant.

### BACKGROUND OF THE INVENTION

According to the state of the art, in the bottoming cycle of for example a combined cycle power plant the iron content in the water can be too high, especially when the water has been standing still in the heat recovery steam generator for a while. This iron needs to be removed from the water before it is all turned into steam, to avoid damage in equipment downstream of the evaporator part in the heat recovery steam generator.

Known combined cycle power plants with a once-through steam generation system typically comprise a separator arranged in the heat recovery steam generator and installed to separate the water fraction (containing the dissolved iron) and to take that water fraction out of the steam flow. The separated water fraction is then thrown away or can be further cleaned. A typical disadvantage of such an arrangement is that a separator requires extra connections, piping, and a support structure. This makes the heat recovery steam generator heavier, more complex and more voluminous.

It is therefore a goal of the present invention to provide a power plant, which overcomes the above-mentioned disadvantage. A further goal of the invention is to provide a water cleaning method for a power plant with water-steam-cycle.

Document JP S60 101 204 A discloses a clean-up operation by installing a cooling water bypass pipe and a cooling water quantity adjusting valve both in a condenser cooling water pipe line, while keeping up clean-up water temperature at a condenser outlet high enough.

### SUMMARY OF THE INVENTION

The object of the invention is achieved by the independent claims. The dependent claims describe advantageous developments and modifications of the invention.

In accordance with the invention there is provided a power plant with a water-steam-cycle. The power plant comprises a steam generator with a plurality of heating surfaces configured to carry a fluid and to transfer heat to said fluid, the plurality of heating surfaces comprising an economizer for preheating said fluid and an evaporator for producing steam, the evaporator being fluidly connected to the economizer. The power plant further comprises a steam turbine that is configured to receive the steam produced in the steam generator to generate power output; the power plant also comprises a condenser configured to condense steam from the steam turbine, the condenser comprising a hotwell as collection container for condensed steam or water. Finally, the power plant also comprises a polishing plant that is arranged fluidly between the hotwell of the condenser and the economizer. A drain line interconnects an outlet of the economizer and the hotwell of the condenser and a fluid line interconnects the outlet of the economizer and the evaporator and the fluid line comprises means to hold back water in the economizer. The invention is characterized in that tubes at the outlet header of the economizer are bent upwards to create a syphon.

In other words, in preparation of the start-up of the power plant, the water contained in the economizer (the rest of the steam generator is empty during stand-still) is pumped through the drain to the hotwell, where it is diluted and the water from there is led at least partly through the polishing plant and cleaned. As soon as the water in the economizer has been replaced by clean water from the hotwell and the polishing plant, the steam generator is ready to start-up. When the water from the hotwell is not of the correct quality, water can be circulated over this drain and led through the polishing plant until it is clean enough for starting the steam generator.

A syphon carries out its function passively without any moveable components and its thermal stability is identical to the other tubes in the steam generator. Depending on the syphon's height above the inlet of the economizer, a part of the preheated water may get into evaporator and superheater tubes. This fluid would have to be drained afterwards.

Therefore, it is preferable, when the cyphon reaches till above the inlet header of the economizer, even more preferably as high as possible.

In an embodiment of the power plant according to the invention, at the outlet of the economizer an outlet header for collecting preheated feedwater and for evenly spreading this preheated feedwater over the evaporator tubes is arranged. From this outlet header the drain line to the hotwell and the fluid line to the evaporator branch off.

According to an embodiment a polishing plant is arranged fluidly between the hotwell of the condenser and the economizer and a capacity of the polishing plant in parallel flow to a main condensate line is less than 100% of an amount of water supplied to the economizer at base load.

The invention is applicable to all power plants with a water-steam-cycle. It is particularly advantageous when the heat source for the steam generator is a gas turbine.

The method according to the present invention comprises the following steps of
- draining water contained in the economizer to the hotwell, where it is diluted,
- leading water from the hotwell at least in part through a polishing plant in order to clean it,
- supplying the economizer with water from the hotwell and water from the polishing plant, and
- starting-up the steam generator as soon as at least a part of the water in the economizer has been replaced by clean water from the hotwell and the polishing plant and is characterized by the step that water gets over syphon tubes and water getting over the syphon tubes at an economizer outlet into evaporator and superheater tubes is drained by a drip leg at a steam generator outlet and led to the hotwell.

The advantages of this method largely correspond to the above-mentioned advantages of the power plant.

Preferably, water is continuously drained from the economizer, led at least partly through the polishing plant and supplied to the economizer in case water from the hotwell and the polishing plant is not of a required quality, until it is clean enough for starting the steam generator.

It is appropriate that water contained in the economizer is drained by pumping boiler feedwater into the economizer and where applicable by opening a drain at an economizer outlet header.

Expediently, the circulation of water is maintained until an iron level is low enough.

An important advantage of the power plant according to the present invention is the implementation of a mechanical arrangement such that only the economizer contains water at standstill, and that an intermediate loop can be formed to circulate the water over the polishing plant until it is clean.

This leads to a very compact design of the bundle, and no separator and connecting piping is needed anymore. This saves a lot of weight and volume, resulting in a lighter and more compact steam generator. This can amount to 20% weight saving, which especially for offshore applications is very important.

Furthermore, the size of the polishing plant can be kept small. Another way to clean up the water that is used, is to install a polishing plant of 100% capacity, and all the water is led through this polishing plant. While filling the steam generator, just prior to start-up, it is with clean water. With this new system the steam generator doesn't need to be drained and refilled, and the polishing plant can be kept at its regular size of about 50%.

Keeping always water in (a part of) the bundle drastically reduces temperature excursions and thus thermal shocks, while in some other designs a gas turbine is started while the heating surfaces are empty, creating severe thermal stresses when filling the heating surfaces. Therefore, the new design is much better suited for fast starting and flexible operation because of this avoidance of thermal stresses.

Especially for offshore applications significant savings are made in weight and space, making the use of e.g. a combined cycle power plant more attractive, or use this as a steam tail for existing simple cycle operating gas turbines (where adding weight on an existing platform or ship is strictly limited).

### BRIEF DESCRIPTION OF THE DRAWINGS

Embodiments of the invention are now described, by way of example only, with reference to the accompanying drawings, of which:
- Figure 1: shows a power plant; and
- Figure 2: shows a heat recovery steam generator bundle of the inventive power plant.

The illustration in the drawings is in schematic form. It is noted that in different figures, similar or identical elements may be provided with the same reference signs.

### DESCRIPTION OF THE DRAWINGS

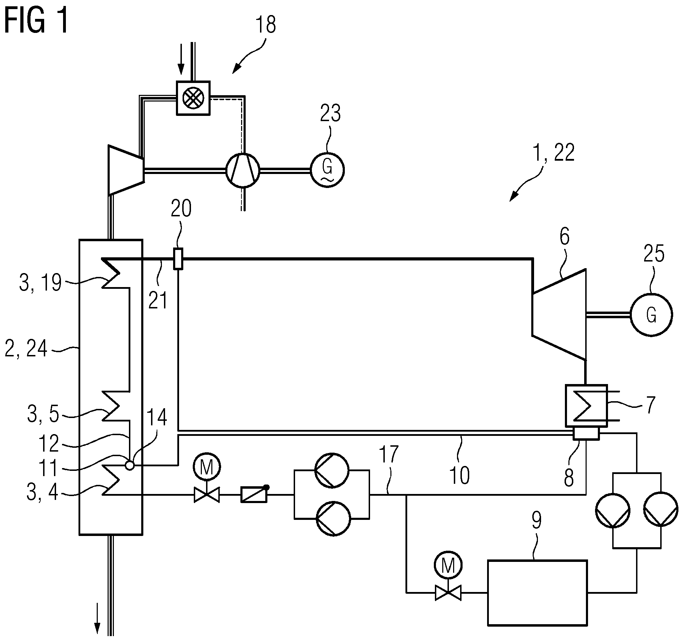

Figure 1 illustrates a schematic diagram of a power plant 1 according to the invention. As illustrated in the exemplary embodiment of Figure 1 the power plant 1 may be a combined cycle power plant 22, including a gas turbine 18. The gas turbine 18 generates power output from combustion of a fuel gas and air mixture. In the embodiment of Figure 1 the gas turbine 18 is connected to a first generator 23. The gas turbine 18 produces exhaust gas at an exit of the gas turbine 18.

According to the embodiment of figure 1 a combined cycle power plant 22 includes a steam generator 2, or more specifically a heat recovery steam generator 24, which is located downstream of the gas turbine 18. The heat recovery steam generator 24 receives the exhaust gas from the gas turbine 18. The heat recovery steam generator 24 comprises a plurality of heating surfaces 3. A heat recovery steam generator 24 usually includes multiple pressure steam systems. In the illustrated example embodiment of Figure 1, for the sake of simplicity, the heating surfaces of the heat recovery steam generator 24 belong to only one pressure system and comprise a superheater 19, an evaporator 5 and an economizer 4. The exhaust gas flows across the heating surfaces 3 to produce steam by extracting energy from the exhaust gas.

According to the embodiment of in Figure 1, a combined cycle power plant 22 also includes a steam turbine 6 that is configured to receive the steam produced in the heat recovery steam generator 24 to generate power output.

The combined cycle power plant 22 illustrated in Figure 1 is in a multi-shaft configuration. The steam turbine 6 is connected to a second generator 25. The invention is of course also applicable to a single shaft configuration.

According to the embodiment, a condenser 7 is located at an exit of the steam turbine 6 and is configured to condense steam from the steam turbine 6, the condenser 7 comprising a hotwell 8 as collection container for condensed steam or water.

The power plant 1 of Figure 1 also shows a main condensate line 17 interconnecting hotwell 8 and economizer 4. In parallel to the condensate line 17 a polishing plant 9 is arranged fluidly between the hotwell 8 of the condenser 7 and the economizer 4. The polishing plant 9 removes impurities, that could cause damage to the steam generator 2 or the steam turbine, from the condensate.

Condenser 7 (+ polishing plant 9), steam generator 2 and steam turbine 6 form a water-steam cycle.

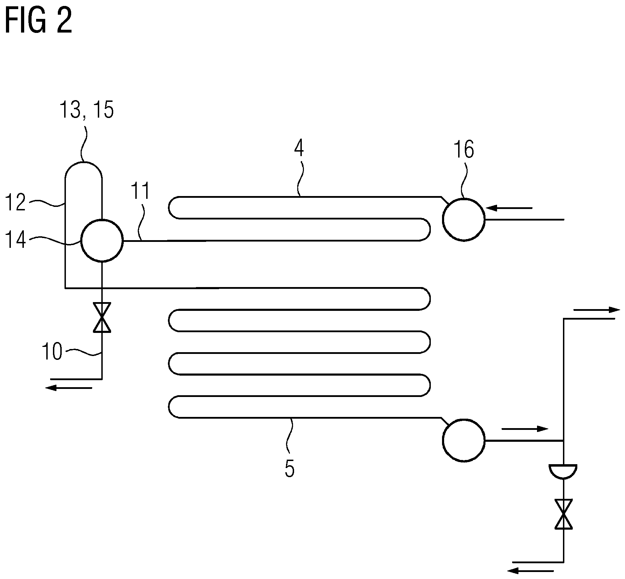

Figure 2 shows a more detailed view of the steam generator 2 for economizer 4 and evaporator 5, where a drain line 10 interconnects an outlet header 14 arranged at an outlet 11 of the economizer 4 and the hotwell 8 of the condenser 7 and where a fluid line 12 interconnects the outlet 11 of the economizer 4 and the evaporator 5. According to the invention the fluid line 12 comprises means 13 to hold back water in the economizer 4 during standstill. The means 13 to hold back water is a syphon 15 that reaches above an inlet header 16 of the economizer 4. In case water is getting over the syphon 15 at the economizer outlet 11 into evaporator 5 and superheater 19 tubes, it is drained by a drip leg 20 at a heat recovery steam generator outlet 21 and led to the hotwell 8.

## Claims

1. A power plant (1) with a water-steam-cycle comprising:
▪ a steam generator (2) with a plurality of heating surfaces (3) configured to carry a fluid and to transfer heat to said fluid, the plurality of heating surfaces (3) comprising an economizer (4) for preheating said fluid and an evaporator (5) for producing steam, the evaporator (5) being fluidly connected to the economizer (4),
▪ a steam turbine (6) that is configured to receive the steam produced in the steam generator (2) to generate power output;
▪ a condenser (7) configured to condense steam from the steam turbine (6), the condenser (7) comprising a hotwell (8) as collection container for condensed steam or water,
▪ a polishing plant (9) that is arranged fluidly between the hotwell (8) of the condenser (7) and the economizer (4),
wherein a drain line (10) interconnects an outlet (11) of the economizer (4) and the hotwell (8) of the condenser (7) and
wherein a fluid line (12) interconnects the outlet (11) of the economizer (4) and the evaporator (5), wherein the fluid line (12) comprises means (13) to hold back water in the economizer(4), **characterized in that** the means (13) to hold back water is a syphon (15).

2. The power plant (1) according to claim 1, wherein the syphon (15) reaches above an inlet header (16) of the economizer (4).

3. The power plant (1) according to claim 1 or claim 2, wherein at the outlet (11) of the economizer (4) an outlet header (14) for collecting preheated feedwater is arranged and from which the drain line (10) and the fluid line (12) branch off.

4. The power plant (1) according to the preceding claims, wherein the polishing plant (9) is configured, that a capacity of the polishing plant (9) in parallel flow to a main condensate line (17) is less than 100% of an amount of water supplied to the economizer (4) at base load.

5. The power plant (1) according to the preceding claims, wherein a heat source for the steam generator (2) is a gas turbine (18) .

6. A method for starting operation of a power plant (1) with a water-steam-cycle, wherein the power plant (1) comprises a steam generator (2) with a plurality of heating surfaces (3) forming at least an economizer (4), a steam turbine (6) and a condenser (7) comprising a hotwell (8), the method comprising:
- draining water contained in the economizer (4) to the hotwell (8), where it is diluted,
- leading water from the hotwell (8) at least in part through a polishing plant (9) in order to clean it,
- supplying the economizer (4) with water from the hotwell (8) and water from the polishing plant (9), and
- starting-up the steam generator (2) as soon as at least a part of the water in the economizer (4) has been replaced by clean water from the hotwell (8) and the polishing plant (9),
**characterized in that** water gets over syphon (15) tubes and that the water getting over the syphon (15) tubes at an economizer outlet (11) into evaporator (5) and superheater (19) tubes is drained by a drip leg (20) at a steam generator outlet (21) and led to the hotwell (8).

7. The method according to claim 6, wherein water is continuously drained from the economizer (4), led through the polishing plant (9) and supplied to the economizer (4) in case water from the hotwell (8) and the polishing plant (9) is not of a required quality, until it is clean enough for starting the steam generator (2).

8. The method according to one of the claims 6 or 7, wherein water contained in the economizer (4) is drained by pumping boiler feedwater from the hotwell (8) and the polishing plant (9) into the economizer (4) and, where applicable, by opening a drain at an economizer (4) outlet header (14).

9. The method according to one of the claims 6 to 8, wherein circulation of water is maintained until an iron level is low enough.

## Patentansprüche

1. Kraftwerk (1) mit einem Wasser-Dampf-Kreislauf, umfassend:
▪ einen Dampferzeuger (2) mit einer Vielzahl von Heizflächen (3), die so konfiguriert sind, dass sie ein Fluid führen und Wärme auf das Fluid übertragen, wobei die Vielzahl von Heizflächen (3) einen Economizer (4) zum Vorwärmen des Fluids und einen Verdampfer (5) zum Erzeugen von Dampf umfasst, wobei der Verdampfer (5) mit dem Economizer (4) in Fluidverbindung steht,
▪ eine Dampfturbine (6), die so konfiguriert ist, dass sie den im Dampferzeuger (2) erzeugten Dampf aufnimmt, um eine Leistungsabgabe zu erzeugen;
▪ einen Kondensator (7), der so konfiguriert ist, dass er Dampf aus der Dampfturbine (6) kondensiert, wobei der Kondensator (7) einen Heißwasserbehälter (8) als Sammelbehälter für kondensierten Dampf oder Wasser umfasst,
▪ eine Polierfiltrieranlage (9), die strömungstechnisch zwischen dem Heißwasserbehälter (8) des Kondensators (7) und dem Economizer (4) angeordnet ist, wobei eine Abflussleitung (10) einen Auslass (11) des Economizers (4) und den Heißwasserbehälter (8) des Kondensators (7) miteinander verbindet und wobei eine Fluidleitung (12) den Auslass (11) des Economizers (4) und den Verdampfer (5) miteinander verbindet, wobei die Fluidleitung (12) Mittel (13) zum Zurückhalten von Wasser im Economizer (4) umfasst, **dadurch gekennzeichnet, dass** es sich bei den Mitteln (13) zum Zurückhalten von Wasser um einen Siphon (15) handelt.

2. Kraftwerk (1) nach Anspruch 1, wobei der Siphon (15) bis oberhalb eines Eintrittssammlers (16) des Economizers (4) reicht.

3. Kraftwerk (1) nach Anspruch 1 oder Anspruch 2, wobei am Auslass (11) des Economizers (4) ein Austrittssammler (14) zum Sammeln von vorgewärmtem Speisewasser angeordnet ist, von dem die Abflussleitung (10) und die Fluidleitung (12) abzweigen.

4. Kraftwerk (1) nach den vorhergehenden Ansprüchen, wobei die Polierfiltrieranlage (9) so konfiguriert ist, dass eine Kapazität der Polierfiltrieranlage (9) in einem Parallelstrom zu einer Hauptkondensatleitung (17) weniger als 100 % einer dem Economizer (4) bei Grundlast zugeführten Wassermenge beträgt.

5. Kraftwerk (1) nach den vorhergehenden Ansprüchen, wobei es sich bei einer Wärmequelle für den Dampferzeuger (2) um eine Gasturbine (18) handelt.

6. Verfahren zum Anfahren eines Kraftwerks (1) mit einem Wasser-Dampf-Kreislauf, wobei das Kraftwerk (1) einen Dampferzeuger (2) mit einer Vielzahl von Heizflächen (3), die zumindest einen Economizer (4) bilden, eine Dampfturbine (6) und einen Kondensator (7) mit einem Heißwasserbehälter (8) umfasst, wobei das Verfahren umfasst:
- Ableiten von im Economizer (4) enthaltenem Wasser in den Heißwasserbehälter (8), wo es verdünnt wird,
- Leiten von Wasser aus dem Heißwasserbehälter (8) zumindest teilweise durch eine Polierfiltrieranlage (9), um es zu reinigen,
- Versorgen des Economizers (4) mit Wasser aus dem Heißwasserbehälter (8) und Wasser aus der Polierfiltrieranlage (9) und
- Anfahren des Dampferzeugers (2), sobald zumindest ein Teil des Wassers im Economizer (4) durch sauberes Wasser aus dem Heißwasserbehälter (8) und der Polierfiltrieranlage (9) ersetzt wurde, **dadurch gekennzeichnet, dass** Wasser über Siphon- (15) Rohre läuft und dass das Wasser, das über die Siphon- (15) Rohre an einem Auslass (11) des Economizers in Verdampfer-(5) und Überhitzer- (19) Rohre gelangt, durch einen Kondensatsammler (20) an einem Auslass (21) des Dampferzeugers abgeleitet und zum Heißwasserbehälter (8) geleitet wird.

7. Verfahren nach Anspruch 6, wobei kontinuierlich Wasser aus dem Economizer (4) abgeleitet, durch die Polierfiltrieranlage (9) geleitet und dem Economizer (4) zugeführt wird, falls Wasser aus dem Heißwasserbehälter (8) und der Polierfiltrieranlage (9) nicht von einer erforderlichen Qualität ist, bis es sauber genug ist, um den Dampferzeuger (2) zu starten.

8. Verfahren nach einem der Ansprüche 6 oder 7, wobei im Economizer (4) enthaltenes Wasser durch Pumpen von Kesselspeisewasser aus dem Heißwasserbehälter (8) und der Polierfiltrieranlage (9) in den Economizer (4) und gegebenenfalls durch Öffnen eines Ablaufs an einem Austrittssammler (14) des Economizers (4) abgeleitet wird.

9. Verfahren nach einem der Ansprüche 6 bis 8, wobei die Wasserzirkulation aufrechterhalten wird, bis ein Eisengehalt niedrig genug ist.

## Revendications

1. Centrale électrique (1) avec un cycle eau-vapeur, comprenant :
• un générateur de vapeur (2) avec une pluralité de surfaces chauffantes (3) configuré pour transporter un fluide et pour transférer de la chaleur audit fluide, la pluralité de surfaces chauffantes (3) comprenant un économiseur (4) pour préchauffer ledit fluide et un évaporateur (5) pour produire de la vapeur, l'évaporateur (5) étant en liaison fluidique avec l'économiseur (4),
• une turbine à vapeur (6) qui est configurée pour recevoir la vapeur produite dans le générateur de vapeur (2) afin de générer de l'électricité ;
• un condenseur (7) configuré pour condenser la vapeur provenant de la turbine à vapeur (6), le condenseur (7) comprenant une bâche alimentaire (8) en guise de cuve collectrice pour la vapeur condensée ou l'eau ;
• une installation de polissage (9) qui est disposée en liaison fluidique entre la bâche alimentaire (8) du condenseur (7) et l'économiseur (4),
dans laquelle une conduite de drainage (10) relie une sortie (11) de l'économiseur (4) et la bâche alimentaire (8) du condenseur (7) et dans laquelle une conduite (12) pour un fluide relie la sortie (11) de l'économiseur (4) et l'évaporateur (5), dans laquelle la conduite (12) pour le fluide comprend des moyens (13) pour retenir l'eau dans l'économiseur (4),
***caractérisée en ce que***
les moyens (13) pour retenir l'eau sont un siphon (15).

2. Centrale électrique (1) selon la revendication 1, dans laquelle le siphon (15) dépasse un collecteur d'entrée (16) de l'économiseur (4).

3. Centrale électrique (1) selon la revendication 1 ou la revendication 2, dans laquelle, à la sortie (11) de l'économiseur (4), se trouve un collecteur de sortie (14) destiné à collecter de l'eau d'alimentation préchauffée et depuis lequel se ramifient la conduite de drainage (10) et la conduite (12) pour le fluide.

4. Centrale électrique (1) selon l'une quelconque des revendications précédentes, dans laquelle l'installation de polissage (9) est configurée de telle sorte que
une capacité de l'installation de polissage (9) en écoulement parallèle à une conduite principale (17) de condensat, est inférieure à 100 % d'un volume d'eau fourni à l'économiseur à sa charge de base.

5. Centrale électrique (1) selon l'une quelconque des revendications précédentes, dans laquelle une source de chaleur pour le générateur de vapeur (2) est une turbine à gaz (18).

6. Procédé de démarrage du fonctionnement d'une centrale électrique (1) avec un cycle eau-vapeur, dans lequel la centrale électrique (1) comprend un générateur de vapeur (2) avec une pluralité de surfaces chauffantes (3) formant au moins un économiseur (4), une turbine à vapeur (6) et un condenseur (7) comprenant une bâche alimentaire (8), le procédé comprenant :
- l'évacuation de l'eau contenue dans l'économiseur (4) vers la bâche alimentaire (8), dans laquelle elle est diluée,
- l'envoi de l'eau de la bâche alimentaire (8), au moins partiellement, à travers une installation de polissage (9) de manière à l'épurer,
- l'alimentation de l'économiseur (4) avec l'eau de la bâche alimentaire (8) et l'eau de l'installation de polissage (9), et
- le démarrage du générateur de vapeur (2) dès qu'au moins une partie de l'eau dans l'économiseur (4) a été remplacée par de l'eau pure provenant de la bâche alimentaire (8) et de l'installation de polissage (9),
***caractérisé en ce que***
l'eau passe par-dessus les tubes du siphon (15) et ***en ce que*** l'eau passant par-dessus les tubes du siphon (15) à une sortie (11) de l'économiseur dans l'évaporateur (5) et des tubes (19) de surchauffeur est drainée par un collecteur d'impuretés (20) à une sortie (21) du générateur de vapeur et amenée jusqu'à la bâche alimentaire (8).

7. Procédé selon la revendication 6, dans lequel l'eau est drainée en continu de l'économiseur (4), amenée à travers l'installation de polissage (9) et fournie à l'économiseur (4) dans le cas où l'eau provenant de la bâche alimentaire (8) et de l'installation de polissage (9) n'est pas de la qualité requise, jusqu'à ce qu'elle soit assez propre pour le démarrage du générateur de vapeur (2).

8. Procédé selon l'une des revendications 6 ou 7, dans lequel l'eau contenue dans l'économiseur (4) est drainée en pompant l'eau d'alimentation de la chaudière de la bâche alimentaire (8) et de l'installation de polissage (9) dans l'économiseur (4) et, le cas échéant, en ouvrant une vidange sur le collecteur de sortie (14) de l'économiseur (4).

9. Procédé selon l'une quelconque des revendications 6 à 8, dans lequel la circulation de l'eau est maintenue jusqu'à ce que le niveau soit assez bas.
